# EUROPÄISCHE PATENTSCHRIFT

(11) **EP 2 342 105 B1**
(45) Veröffentlichungstag und Bekanntmachung des Hinweises auf die Patenterteilung: **24.06.2020**
(21) Anmeldenummer: 09777599.3
(22) Anmeldetag: 01.08.2009
(51) Int. Cl.: B60T 7/20, B60T 8/32, B60T 13/66

(54) **STEUERUNGSANORDNUNG FÜR EIN ANHÄNGEFAHRZEUG**
CONTROL ARRANGEMENT FOR A TRAILER VEHICLE
AGENCEMENT DE COMMANDE POUR UN VÉHICULE TRACTÉ

(30) Priorität: 03.11.2008 DE 102008054366
(43) Veröffentlichungstag der Anmeldung: 13.07.2011
(73) Patentinhaber: WABCO GmbH, 30453 Hannover (DE)
(72) Erfinder: RISSE, Rainer, 30982 Pattensen-Reden (DE); RONNENBERG, Udo, 30900 Wedemark (DE); STENDER, Axel, 31787 Hameln (DE)
(74) Vertreter: Koschnitzki, Thomas
(86) Internationale Anmeldenummer: PCT/EP2009/005590
(87) Internationale Veröffentlichungsnummer: WO 2010/060493

(56) Entgegenhaltungen:
- GB-A- 2 425 760
- US-A1- 2002 189 882
- US-A1- 2003 222 774
- US-A1- 2006 244 305
- US-B1- 7 347 507

## Beschreibung

Die Erfindung betrifft eine Steuerungsanordnung für ein Anhängefahrzeug, sowie ein Anhängefahrzeug mit einer Steuerungsanordnung.

Es sind Anhängefahrzeuge bekannt, die ein Bremssystem, eine Lichtanlage und eine Steuereinrichtung zur Steuerung der Lichtanlage aufweisen. Das Bremssystem hat die Funktion, das Bremsverhalten des Anhängefahrzeuges zu steuern. Die Lichtanlage umfasst verschiedene Lichtelemente wie beispielsweise Bremslichter, Rückfahrscheinwerfer, Blinker oder Seitenmarkierungslichter. Mittels der Steuereinrichtung lässt sich der Status der Lichtanlage ändern, beispielsweise ein Bremslicht, ein Rückfahrscheinwerfer, ein Blinker, ein Warnlicht und/oder ein Seitenmarkierungslicht aktivieren oder deaktivieren.

Aus der US 7,347,507 B1 ist ein Bremsencontroller bekannt. Aus der US 2003/0222774 A1 ist ein Überwachungssystem einer Fahrzeugbremsanlage bekannt. Aus der GB 2 425 760 A ist eine Verbindungssensierung durch eine Fahrzeuganhängersteuerungseinrichtung bekannt. Aus der US 2006/0244305 A1 sind ein Luftaufbereitungssystem und ein Verfahren zum sicheren Lösen eines Parkbremssystems bekannt. Aus der US 2002/0189882 A1 ist ein Nachrüstsystem zur Steuerung der Bremsanlage eines Schulbusses in Abhängigkeit vom Türöffnungszustand bekannt.

Aufgabe der vorliegenden Erfindung ist es, die Funktionalität einer Steuerungsanordnung, die ein Bremssystem, eine Lichtanlage und eine Steuereinrichtung zur Steuerung der Lichtanlage umfasst, zu erhöhen. Eine weitere Aufgabe ist es, ein Anhängefahrzeug mit einer derartigen Steuerungsanordnung zu schaffen.

Diese Aufgaben werden durch eine Steuerungsanordnung und ein Anhängefahrzeug nach den unabhängigen Ansprüchen gelöst.

Vorteilhafte Weiterbildungen sind Gegenstände der abhängigen Ansprüche.

Die erfindungsgemäße Steuerungsanordnung ermöglicht es dem Bremssystem, Informationen über den Status der Lichtanlage für die Steuerung des Bremsverhaltens des Anhängefahrzeuges zu verwenden. Umgekehrt kann der Status der Lichtanlage durch das Bremssystem aktiv beeinflusst werden. Zu dem kann dadurch, dass Informationen über den Status der Lichtanlage mittels der Steuereinrichtung an das Bremssystem übertragen wird und das Bremssystem die Lichtanlage mittelbar über die Steuereinrichtung beeinflusst, eine hochohmige bzw. galvanische Entkopplung zwischen Bremssystem und Lichtanlage erreicht werden.

Beispielsweise kann das Bremssystem ohne zusätzliche Verkabelung den Status eines Rückscheinwerfers der Lichtanlage zur Erkennung einer anstehenden Rückwärtsfahrt einlesen, anhand des Status eines Blinkers der Lichtanlage eine bevorstehende Kurvenfahrt erkennen, und im Falle eines aktiven Warnlichtes der Lichtanlage einen sicheren Fahrwerkszustand oder ein Entladeniveau einstellen. Bei automatischen Fahrdynamikeingriffen des Bremssystems kann beispielsweise das Bremssystem Bremsleuchten der Lichtanlage mittels der Steuereinrichtung aktiv ansteuern oder im Falle einer Aktivierung einer Rampen-Anfahrhilfe Begrenzungsleuchten der Lichtanlage ansteuern.

Vorzugsweise umfasst die Steuerungsanordnung ein mittels der Steuereinrichtung steuerbares Sensorsystem. Das Sensorsystem kann insbesondere Distanzsensoren für die Rückraumüberwachung, Türschaltkontakte und/oder Temperatursensoren umfassen. Vorteilhafterweise sind Steuereinrichtung und Bremssystem derart eingerichtet, dass Informationen des Sensorsystems mittels der Steuereinrichtung an das Bremssystem übertragen werden. Dies ermöglicht dem Bremssystem, auf Grundlage von Informationen des Sensorsystems in das Bremsverhalten des Anhängefahrzeuges einzugreifen.

Vorzugsweise sind die Lichtelemente der Lichtanlage und/oder die Sensoren des Sensorsystems zumindest teilweise über einen gemeinsamen Bus mit der Steuereinrichtung verbunden. Gegenüber einer ebenfalls möglichen Einzelverdrahtung kann mit einem gemeinsamen Bus insbesondere die Verkabelung und der Installationsaufwand reduziert werden.

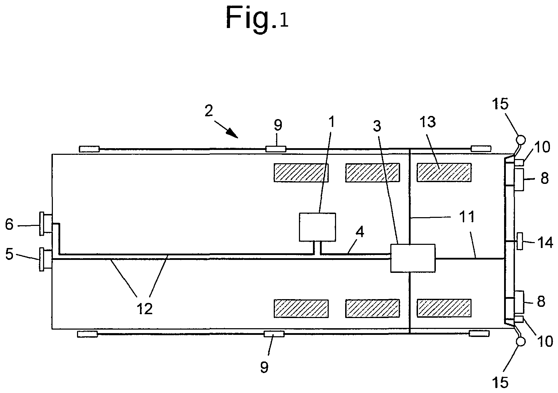

Die Erfindung wird im Folgenden anhand eines Ausführungsbeispiels, das durch eine Figur dargestellt ist, näher erläutert. Die Figur zeigt schematisch ein Anhängefahrzeug mit einer erfindungsgemäßen Steueranordnung.

Das Anhängefahrzeug ist in diesem Fall als Sattelauflieger eines Sattelzuges ausgebildet. Es weist im hinteren Bereich drei Radachsen auf, die symbolhaft durch Räder 13 dargestellt sind.

Die Steuerungsanordnung umfasst ein Bremssystem, eine Lichtanlage 2, eine Steuereinrichtung zur Steuerung der Lichtanlage 2, ein Datenübertragungsmittel 4 zur Übertragung von Daten zwischen der Steuereinrichtung und dem Bremssystem und ein Sensorsystem. Das Bremssystem ist hier ein an sich bekanntes elektronisches Bremssystem mit einem Bremsmodulator 1 mit einer integrierten Steuereinheit für die Steuerung nicht näher dargestellter, den Rädern 13 des Anhängefahrzeuges zugeordneten Radbremsen. Die Lichtanlage 2 umfasst zwei kombinierte Rücklichter 8 , in denen jeweils ein Bremslicht, ein Rückfahrscheinwerfer, ein Blinker und ein Warnlicht integriert ist, sowie mehrere Seitenmarkierungslichter 9 und eine Kennzeichenbeleuchtung 14 . Die Rücklichter 8 sind rechts- und linksseitig am Fahrzeugheck angeordnet, die Kennzeichenbeleuchtung 14 ist in der Mitte des Fahrzeughecks angeordnet. Die Seitenmarkierungslichter 9 befinden sich auf der linken und auf der rechten Seite des Anhängefahrzeuges. Des Weiteren umfasst die Lichtanlage 2 zwei Begrenzungsleuchten 15, die ebenfalls auf der rechten und auf der linken Seite am Fahrzeugheck angeordnet sind. Rücklichter 8, Begrenzungsleuchten 15, Seitenmarkierungslichter 9 und Kennzeichenbeleuchtung 14 sind über eine Verkabelung mit einer hier die Steuereinrichtung bildenden zentralen elektronischen Steuereinheit 3 verbunden. Das Sensorsystem umfasst zwei Distanzsensoren 10, einen Türschaltkontakt (nicht dargestellt) und einen Temperatursensor (nicht dargestellt). Die Distanzsensoren 10 sind rechts- und linksseitig am Fahrzeugheck angeordnet. Sie dienen zur Rückraumüberwachung, insbesondere im Rahmen einer Rampen-Anfahrhilfe. Die Distanzsensoren 10 werden hier durch Ultraschallsensoren ausgebildet.

Die Elemente der Lichtanlage 2, also die Rücklichter 8, die Seitenmarkierungslichter 9, die Begrenzungsleuchten 15 und die Kennzeichenbeleuchtung 14, und die Elemente des Sensorsystems, also die Distanzsensoren 10, der Türschaltkontakt und der Temperatursensor, sind mit der zentralen Steuereinheit 3 mittels eines gemeinsamen Bus 11 verbunden. Der Bus 11 umfasst eine Datenleitung und zwei Versorgungsleitungen, wobei die Datenleitung zur Übertragung von Daten und die Versorgungsleitung zur Versorgung der genannten Elemente mit Strom dient. Über die Datenleitung ist es insbesondere möglich, die Elemente des Sensorsystems und der Lichtanlage 2 zu steuern, beispielsweise die Bremslichter oder einen Blinker zu aktivieren oder zu deaktivieren, oder Messdaten von den Sensorelementen oder Statusinformationen von den Elementen der Lichtanlage 2 an die zentrale Steuereinheit 3 zu übertragen. Für den Anschluss an den Bus 11 sind die zentrale Steuereinheit 3, die Elemente der Lichtanlage 2 und die Elemente des Sensorsystems mit geeigneten Schnittstellen ausgebildet.

Alternativ ist es möglich, teilweise oder vollständig Einzelverdrahtungen vorzusehen, die von der zentralen Steuereinheit 3 zu einem jeweiligen Element der Lichtanlage 2 oder des Sensorsystems führen.

Das Anhängefahrzeug weist einen ersten Anschluss 5 für einen Anschluss der zentralen Steuereinheit 3 an einen Motorwagen auf. Der erste Anschluss 5 ist hier gemäß der Norm ISO 12098 ausgebildet. Des Weiteren ist ein zweiter Anschluss 6 für einen Anschluss des Bremsmodulators 1 an den Motorwagen vorgesehen. Der zweite Anschluss 6 ist hier gemäß der Norm ISO 7638 ausgebildet. Der erste Anschluss 5 und der zweite Anschluss 6 sind auf einer motorwagenseitigen Front des Anhängefahrzeuges angeordnet und jeweils über eine elektrische Verkabelung 12 mit dem Bremsmodulator 1 bzw. der zentralen Steuereinheit 3 verbunden.

Die zentrale Steuereinheit 3 und der Bremsmodulator 1 sind beispielsweise durch geeignete elektronische Komponenten und Programme derart eingerichtet, dass Informationen über den Status der Lichtanlage 2 mittels der zentralen Steuereinheit 3 an den Bremsmodulator 1 und Informationen des Bremssystems vom Bremsmodulator 1 an die zentrale Steuereinheit 3 zwecks Änderung des Status der Lichtanlage 2 übertragen werden. Des Weiteren ist die zentrale Steuereinheit 3 und der Bremsmodulator 1 derart eingerichtet, dass Informationen des Sensorsystems mittels der zentralen Steuereinheit 3 an den Bremsmodulator 1 des Bremssystems übertragen werden. Die Übertragung erfolgt über das Datenübertragungsmittel 4, das in diesem Fall als Bus 4 ausgebildet ist, der Bremsmodulator 1 und zentrale Steuereinheit 3 miteinander verbindet, wobei Bremsmodulator 1 und zentrale Steuereinheit 3 für die Verbindung geeignete Schnittstellen aufweisen. Alternativ wäre auch eine Einzelverdrahtung möglich. Der Bus 4 weist zumindest eine Datenleitung zur Übertragung von Daten auf.

Dem Bremssystem stehen damit Informationen über den Status der Lichtanlage 2 und Informationen des Sensorsystems, insbesondere Messdaten, mittelbar über die zentrale Steuereinheit 3 zur Verfügung. Diese Informationen können dazu verwendet werden, das durch das Bremssystem gesteuerte Bremsverhalten des Anhängefahrzeuges zu verbessern. Des Weiteren kann das Bremssystem über die zentrale Steuereinheit 3 den Status der Lichtanlage 2 beeinflussen, beispielsweise Bremslichter oder Warnlichter aktivieren. Dadurch, dass die Versorgung der Elemente der Lichtanlage 2 und des Sensorsystems durch die zentrale Steuereinheit 3 übernommen wird, ist das Bremssystem von der Lichtanlage 2 und dem Sensorsystem elektrisch entkoppelt.

In einer alternativen Ausführungsform ist der Anschluss 6 nicht mit dem Bremsmodulator 1, sondern mit der zentralen Steuereinheit 3 verbunden. Das Bremssystem erhält damit Signale von einem Motorwagen und die elektrische Stromversorgung über die zentrale Steuereinheit 3. Der Bus 4 weist hierfür geeignete Leitungen auf, hier eine Datenbusleitung für die Übertragung von Daten und Leitungen für die elektrische Versorgung.

## Patentansprüche

1. Steuerungsanordnung für ein Anhängefahrzeug, umfassend ein elektronisches Bremssystem, eine Lichtanlage (2), eine Steuereinrichtung in Form einer zentralen elektronischen Steuereinheit (3) zur Steuerung der Lichtanlage (2), und ein Datenübertragungsmittel (4) zur Übertragung von Daten zwischen der zentralen elektronischen Steuereinheit (3) und dem elektronischen Bremssystem, wobei die zentrale elektronische Steuereinheit (3) und das elektronische Bremssystem durch elektronische Komponenten und Programme derart eingerichtet sind, dass Informationen über den Status der Lichtanlage (2) mittels der zentralen elektronischen Steuereinheit (3) über das Datenübertragungsmittel (4) an das elektronische Bremssystem und/oder Informationen des elektronischen Bremssystems über das Datenübertragungsmittel (4) an die zentrale elektronische Steuereinheit (3) zwecks Änderung des Status der Lichtanlage (2) übertragen werden.

2. Anordnung nach einem, der vorhergehenden Ansprüche, wobei das elektronischen Bremssystem einen Bremsmodulator (1) aufweist, und das Datenübertragungsmittel (4) zur Übertragung von Daten zwischen der zentralen elektronischen Steuereinheit (3) und dem Bremsmodulator (1) ausgebildet ist.

3. Anordnung nach einem der vorhergehenden Ansprüche, wobei das Datenübertragungsmittel (4) ein Datenbus (4) und/oder mindestens eine Einzelverdrahtung umfasst.

4. Anordnung nach einem der vorhergehenden Ansprüche, zusätzlich umfassend einen ersten Anschluss (5) für einen Anschluss der zentralen elektronischen Steuereinheit (3) an einen Motorwagen.

5. Anordnung nach einem der vorhergehenden Ansprüche, zusätzlich umfassend einen zweiten Anschluss (6) für einen Anschluss des elektronischen Bremssystems an einen Motorwagen.

6. Anordnung nach einem der vorhergehenden Ansprüche, zusätzlich umfassend ein mittels der zentralen elektronischen Steuereinheit (3) steuerbares Sensorsystem.

7. Anordnung nach Anspruch 6, wobei Steuereinrichtung und Bremssystem derart eingerichtet sind, dass Informationen des Sensorsystems mittels der Steuereinrichtung an das elektronische Bremssystem übertragen werden.

8. Anordnung nach einem der vorhergehenden Ansprüche, wobei die Lichtanlage (2) und/oder gegebenenfalls das Sensorsystem mit der zentralen elektronischen Steuereinheit (3) über einen Bus (11) und/oder über mindestens eine Einzelverdrahtung verbunden ist.

9. Anordnung nach einem der vorhergehenden Ansprüche, wobei die Lichtanlage (2) mindestens ein Bremslicht (8), einen Rückfahrscheinwerfer (8), einen Blinker (8), ein Warnlicht (8), eine Begrenzungsleuchte und/oder ein Seitenmarkierungslicht (9) umfasst.

10. Anordnung nach einem der vorhergehenden Ansprüche in Verbindung mit Anspruch 6, wobei das Sensorsystem mindestens einen Distanzsensor (10), einen Türschaltkontakt und/oder einen Temperatursensor umfasst.

11. Anhängefahrzeug, ausgerüstet mit einer Steueranordnung nach einem der Ansprüche 1 bis 10.

## Claims

1. Control arrangement for a trailer vehicle, comprising an electronic brake system, a light system (2), a control device in the form of a central electronic control unit (3) for controlling the light system (2), and a data transmission means (4) for transmitting data between the central electronic control unit (3) and the electronic brake system, wherein the central electronic control unit (3) and the electronic brake system are designed by electronic components and programs in such a way that information about the status of the light system (2) is transmitted to the electronic brake system by means of the central electronic control unit (3) via the data transmission means (4) and/or information in the electronic brake system is transmitted to the central electronic control unit (3) via the data transmission means (4) for the purpose of changing the status of the light system (2).

2. Arrangement according to one of the preceding claims, wherein the electronic brake system has a brake modulator (1), and the data transmission means (4) is designed to transmit data between the central electronic control unit (3) and the brake modulator (1).

3. Arrangement according to either of the preceding claims, wherein the data transmission means (4) comprises a data bus (4) and/or at least one individual wiring system.

4. Arrangement according to one of the preceding claims, additionally comprising a first connection (5) for connection of the central electronic control unit (3) to a truck.

5. Arrangement according to one of the preceding claims, additionally comprising a second connection (6) for connection of the electronic brake system to a truck.

6. Arrangement according to one of the preceding claims, additionally comprising a sensor system which can be controlled by means of the central electronic control unit (3).

7. Arrangement according to Claim 6, wherein the control device and the brake system are designed in such a way that information in the sensor system can be transmitted to the electronic brake system by means of the control device.

8. Arrangement according to one of the preceding claims, wherein the light system (2) and/or possibly the sensor system are/is connected to the central electronic control unit (3) via a bus (11) and/or via at least one individual wiring system.

9. Arrangement according to one of the preceding claims, wherein the light system (2) comprises at least a brake light (8), a reversing light (8), an indicator (8), a warning light (8), a clearance lamp and/or a side marker light (9).

10. Arrangement according to one of the preceding claims in conjunction with Claim 6, wherein the sensor system comprises at least a distance sensor (10), a door switching contact and/or a temperature sensor.

11. Trailer vehicle, equipped with a control arrangement according to one of Claims 1 to 10.

## Revendications

1. Agencement de commande pour un véhicule tracté, comprenant un système de freinage électronique, une installation d'éclairage (2), un dispositif de commande sous la forme d'une unité de commande électronique centrale (3) destinée à commander l'installation d'éclairage (2), et un moyen de transmission de données (4) destiné à transmettre des données entre l'unité de commande électronique centrale (3) et le système de freinage électronique, dans lequel l'unité de commande électronique centrale (3) et le système de freinage électronique sont conçus, au moyen de composants électroniques et de programmes, de manière à ce que des informations concernant l'état du système d'éclairage (2) soient transmises au système de freinage électronique au moyen de l'unité de commande électronique centrale (3) par l'intermédiaire du moyen de transmission de données (4) et/ou à ce que des informations du système de freinage électronique soient transmises à l'unité de commande électronique centrale (3) par l'intermédiaire du moyen de transmission de données (4) à des fins de modification de l'état du système d'éclairage (2).

2. Agencement selon l'une des revendications précédentes, dans lequel le système de freinage électronique comporte un modulateur de freinage (1), et le moyen de transmission de données (4) est conçu pour transmettre des données entre l'unité de commande électronique centrale (3) et le modulateur de freinage (1).

3. Agencement selon l'une des revendications précédentes, dans lequel le moyen de transmission de données (4) comprend un bus de données (4) et/ou au moins un câblage individuel.

4. Agencement selon l'une des revendications précédentes, comprenant en outre une première connexion (5) permettant de connecter l'unité de commande électronique centrale (3) à un véhicule à moteur.

5. Agencement selon l'une des revendications précédentes, comprenant en outre une deuxième connexion (6) permettant de connecter le système de freinage électronique à un véhicule à moteur.

6. Agencement selon l'une des revendications précédentes, comprenant en outre un système de capteurs pouvant être commandé au moyen de l'unité de commande électronique centrale (3).

7. Agencement selon la revendication 6, dans lequel le dispositif de commande et le système de freinage sont conçus de manière à ce que des informations du système de capteurs soient transmises au système de freinage électronique au moyen du dispositif de commande.

8. Agencement selon l'une des revendications précédentes, dans lequel l'installation d'éclairage (2) et/ou, le cas échéant, le système de capteurs est relié à l'unité de commande électronique centrale (3) par l'intermédiaire d'un bus (11) et/ou par l'intermédiaire d'au moins un câblage individuel.

9. Agencement selon l'une des revendications précédentes, dans lequel le système d'éclairage (2) comprend au moins un feu stop (8), un feu de recul (8), un feu indicateur de direction (8), un feu d'avertissement (8), un feu de position et/ou un feu de repère latéral (9).

10. Agencement selon l'une des revendications précédentes en relation avec la revendication 6, dans lequel le système de capteurs comprend au moins un capteur de distance (10), un contact d'interrupteur de porte et/ou un capteur de température.

11. Véhicule tracté équipé d'un dispositif de commande selon l'une des revendications 1 à 10 précédentes.
